## Europäisches Patentamt
## European Patent Office
## Office européen des brevets

(19)

(11) Numéro de publication : **0 005 792**
**B1**

(12) **FASCICULE DE BREVET EUROPÉEN**

(45) Date de publication du fascicule du brevet :
21.10.81

(51) Int. Cl.³ : **G 02 B 5/16**

(21) Numéro de dépôt : **79101576.1**

(22) Date de dépôt : **23.05.79**

(54) **Procédé de raccordement de fibres optiques disposées en nappe dans un câble, et dispositif de mise en œuvre du procédé.**

(30) Priorité : 30.05.78 FR 7816155

(43) Date de publication de la demande :
12.12.79 (Bulletin 79/25)

(45) Mention de la délivrance du brevet :
21.10.81 Bulletin 81/42

(84) Etats contractants désignés :
CH DE FR GB IT NL SE

(56) Documents cités :
DE - A - 2 411 814
DE - A - 2 511 804
GB - A - 1 406 277
NL - A - 7 710 946
US - A - 3 871 935
US - A - 3 912 574
US - A - 4 029 390

(73) Titulaire : **COMPAGNIE LYONNAISE DE TRANSMIS-
SIONS OPTIQUES Société anonyme dite:**
**170, Quai de Clichy**
**F-92111 Clichy (FR)**

(72) Inventeur : **Mignien, Georges**
**30, rue Voltaire**
**F-69330 Meyzieu (FR)**

(74) Mandataire : **Weinmiller, Jürgen et al**
**Zeppelinstrasse 63**
**D-8000 München 80 (DE)**

**EP 0 005 792 B1**

Imprimerie Jouve, 17, rue du Louvre, 75001 Paris, France

Procédé de raccordement de fibres optiques disposées en nappe dans un câble, et dispositif
de mise en œuvre du procédé

La présente invention concerne un procédé de raccordement de fibres optiques disposées en nappe dans un câble, éventuellement après développement de la nappe selon un ruban plat, comportant les opérations suivantes :

a) on sépare les parties supérieure et inférieure du ruban emprisonnant les fibres,

b) on coupe et écarte lesdites parties supérieure et inférieure sur une longueur permettant de dégager une zone de jonction pour les fibres,

c) on pose les fibres à raccorder dans des vés de positionnement d'une plaquette,

d) on dépose sur une partie des fibres à raccorder une colle ou une résine synthétique,

e) on fait durcir la colle ou la résine synthétique.

Dans la plupart des procédés de raccordement de fibres optiques connus, les fibres sont raccordées deux à deux, soit par soudure, soit dans des connecteurs. Ceci nécessite un alignement précis, long et onéreux, sur chaque couple de fibres à raccorder. En outre, la préparation des fibres avant cette opération, comprenant le dénudage de leurs extrémités, leur coupe, leur polissage, est délicate et rend difficile une opération de raccordement de câbles sur le terrain.

On a aussi proposé des raccordements de fibres par groupes, simultanément. Mais ces procédés nécessitent l'emploi de matrices de positionnement usinées de grande précision.

On a enfin proposé de disposer les extrémités des fibres à raccorder côte à côte dans des rainures de positionnement de deux moitiés d'une plaquette symétriques par rapport à un axe parallèle aux axes des fibres, de fixer les fibres sur la plaquette par des gouttes de colle à proximité des extrémités non dénudées des rubans, de couper avec précaution les fibres dans le plan de symétrie de la plaquette perpendiculaire aux axes des fibres, de façon à obtenir des sections de coupe bien planes, de retirer les longueurs des fibres en excès, puis de rabattre l'une des moitiés de la plaquette sur l'autre de façon à amener en contact les faces d'extrémité des fibres.

La présente invention concerne en premier lieu un procédé de raccordement de fibres optiques plus simple, ne nécessitant pas une coupe précise des extrémités des fibres, facilement utilisable sur chantier, et cependant peu onéreux.

Le procédé selon l'invention est caractérisé en ce qu'il comprend en outre les opérations suivantes :

f) avant de poser les fibres à raccorder dans des vés de positionnement de la plaquette, on coupe leurs extrémités sans précaution,

g) on dépose la colle ou la résine synthétique sur au moins une partie de la longueur des fibres à raccorder disposée sur la plaquette, jusqu'à leurs extrémités, puis on dispose sur la longueur encollée des fibres un couvercle presseur,

h) après durcissement de la colle ou de la résine synthétique, on scie à écartement constant dans des plans parallèles l'ensemble constitué de la plaquette, des fibres, de la colle ou résine synthétique et du couvercle presseur, et retire la zone comprise entre les plans de sciage,

i) on remet bout à bout les parties subsistantes de la plaquette de part et d'autre des plans de sciage, avec coïncidence des extrémités des fibres, en interposant un liquide ou une résine polymérisable d'indice de réfraction voisin de celui du cœur des fibres, puis on presse les parties subsistantes de la plaquette l'une contre l'autre et les immobilise.

Il comporte en outre de préférence au moins l'une des variantes suivantes :

— l'on dispose la plaquette en position horizontale, et l'on incline d'un angle faible par rapport à l'horizontale les extrémités du ruban, de façon à faciliter la mise en place des fibres dans les vés de positionnement de la plaquette,

— l'on dispose sur les fibres une résine synthétique polymérisable par un rayonnement ultraviolet, puis un couvercle presseur laissant passer ce rayonnement, et on assure le durcissement de la résine par exposition au rayonnement ultraviolet,

— l'on remet bout à bout les parties subsistantes de la plaquette dans les plans de sciage en disposant des cylindres de guidage dans des vés de dimensions importantes disposés latéralement sur la plaquette et d'axes parallèles aux axes des fibres,

— l'on immobilise la plaquette après remise bout à bout de ses parties subsistantes dans les plans de sciage par compression entre des plateaux, avec interposition d'un matelas déformable,

— pour le raccordement de fibres optiques disposées dans un câble à empilage de rubans plats, l'on effectue les opérations ci-dessus sur chaque ruban plat, puis empile les parties subsistantes des plaquettes remises bout à bout avant de les immobiliser.

L'invention s'étend encore à une plaquette pour la mise en œuvre de la variante du procédé de l'invention dans laquelle on remet bout à bout les parties subsistantes de la plaquette dans les plans de sciage en disposant des cylindres de guidage dans des vés de dimensions importantes disposés latéralement sur la plaquette et d'axes parallèles aux axes des fibres, caractérisée en ce qu'elle est de forme rectangulaire, et comporte dans sa zone centrale une rangée de vés de largeur telle que les fibres optiques peuvent s'y loger, mais en restant en saillie par rapport à la face supérieure de la plaquette, et de chaque côté des vés de dimension importante permettant le logement de cylindres de guidage. De préférence, la plaquette est en un alliage ductile, et obtenue par emboutissage à l'aide d'une empreinte en un métal dur, ou bien en un matériau thermoplastique de bonne stabilité dimensionnelle (avantageusement en polyphénylène sulfuré) et obtenue par moulage.

Il est décrit ci-après, à titre d'exemple et en référence aux figures du dessin annexé, un procédé de raccordement de fibres optiques selon l'invention et une plaquette pour la mise en œuvre de ce procédé.

La figure 1 représente en coupe la préparation de l'extrémité d'un ruban plat à plusieurs fibres optiques parallèles.

La figure 2 représente en coupe transversale une plaquette de support des fibres optiques à raccorder.

La figure 3 représente en coupe longitudinale la façon dont on dispose les fibres à raccorder sur la plaquette.

La figure 4 représente en coupe transversale la plaquette munie des fibres à raccorder, réunies par une résine polymérisable sous un couvercle presseur, la résine étant en cours de polymérisation sous un rayonnement ultra-violet.

La figure 5A représente en coupe longitudinale la façon dont les parties supérieure et inférieure du ruban sont fixées à la plaquette.

La figure 5B représente en plan vues de dessus la plaquette et les fibres à raccorder, vues à travers le couvercle et la résine de solidarisation transparentes.

La figure 6 représente également en plan vues de dessus la plaquette et les fibres à raccorder, vue à travers le couvercle et la résine de solidarisation transparente, avec les plans de sciage.

La figure 7 représente en coupe transversale deux couples de deux demi-plaquettes, avec les cylindres de positionnement, et des matelas déformables entre deux plateaux de pressage.

La figure 8 représente à échelle agrandie le détail A de la figure 7.

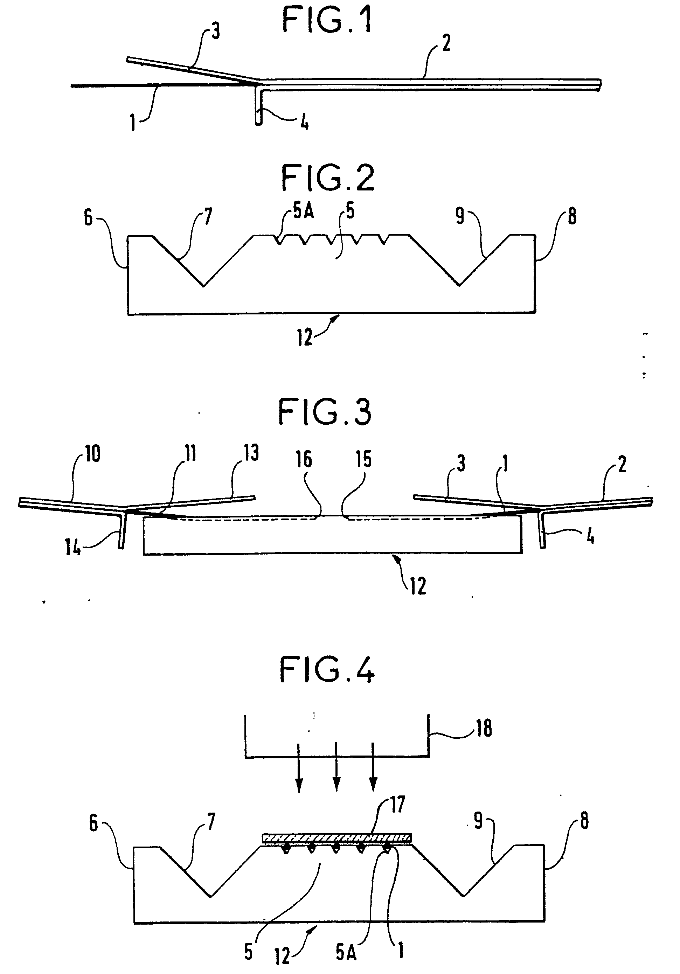

Le ruban plat 2 représenté en figure 1 est un élément alvéolé ; chaque alvéole contient une fibre optique 1 sans autre protection qu'un revêtement primaire de résine synthétique de quelques microns d'épaisseur. Lorsque l'élément de câblage est cylindrique, on peut se ramener à une configuration plane en développant le câble, de façon à permettre le raccordement selon le procédé de l'invention.

La préparation des extrémités de l'élément de câblage est réalisé comme suit :

— on ouvre les deux demi-rubans 3, 4 emprisonnant les fibres,

— on coupe le demi-ruban supérieur 3 à la longueur,

— on coupe le demi-ruban inférieur 4 à une longueur inférieure,

— on met en position les deux demi-rubans de façon que leur position ne constitue pas une gêne pour la suite des travaux, en les écartant et en rabattant le demi-ruban inférieur à angle droit vers le bas. Cette position permet ensuite d'employer les deux demi-rubans à l'ancrage mécanique sur la plaquette de raccordement,

— on casse les fibres à la longueur, sans précaution aucune.

Les fibres doivent ensuite être positionnées sur une plaquette de précision comportant autant de rainures qu'il y a de couples de fibres à raccorder. Une telle plaquette 12 est représentée en coupe en figure 2. Elle peut être, soit en métal ductile embouti, soit en matériau thermoplastique moulé.

La plaquette comporte une partie centrale 5 munie de rainures en vé 5 A de positionnement des fibres, d'angle 60° et de profondeur supérieure d'environ 50 % au diamètre des fibres à raccorder. Les parties latérales 6, 8 sont munies de grandes rainures de guidage 7, 9 dont la fonction sera décrite plus loin. Lorsque la plaquette est en métal ductile, par exemple en alliage léger d'aluminium connu sous la dénomination AU4G, elle est obtenue par emboutissage à la presse à l'aide d'une empreinte en acier traité. Lorsqu'elle est en matériau thermoplastique, il convient que celui-ci présente une bonne stabilité dimensionnelle, permette l'obtention de cotes précises et puisse subir un sciage sans déformation. Le polyéthylène sulfuré notamment convient bien. Le profil d'usinage est le même que celui de la pièce emboutie.

Le positionnement des fibres à raccorder dans la plaquette de raccordement est représenté en figure 3, où la plaquette est représentée en élévation latérale. Une inclinaison des rubans 2 et 10 d'environ 5° par rapport au plan horizontal de la face supérieure de la plaquette facilite la mise en place des fibres 1, 11 d'extrémités 15, 16 dans les rainures de la plaquette sans intervention manuelle. Les demi-rubans supérieurs 3, 13 restent au-dessus de la plaquette, les demi-rubans inférieurs 4, 14 restent de part et d'autre de celles-ci.

La solidarisation des fibres dans la plaquette est représentée en figure 4, la plaquette étant vue en coupe. Les fibres devant être maintenues au fond de leur logement, un couvercle presseur 17 est appliqué sur les fibres 1, après enrobage de celles-ci à l'aide d'une colle ou d'une résine (17A), qui assure l'assemblage compact des trois éléments plaquette, fibres et couvercle presseur. La liaison entre ces trois éléments doit être rigide afin de créer un ensemble compact et indéformable se prêtant bien à l'opération de sciage ultérieure. On utilise avantageusement à cet effet une résine liquide pure polymérisée, additionnée d'un agent photo-ionisateur, et polymérisable sous l'action du rayonnement ultra-violet émis par une lampe 18 (par exemple la résine vendue sous la désignation commerciale « résine U.V. 358 »). Dans ce cas, le couvercle presseur 17 doit être en verre pour permettre au rayonnement d'atteindre la résine. On peut obtenir la polymérisation de la résine en quelques minutes, ce qui permet d'effectuer facilement des raccordements sur chantier.

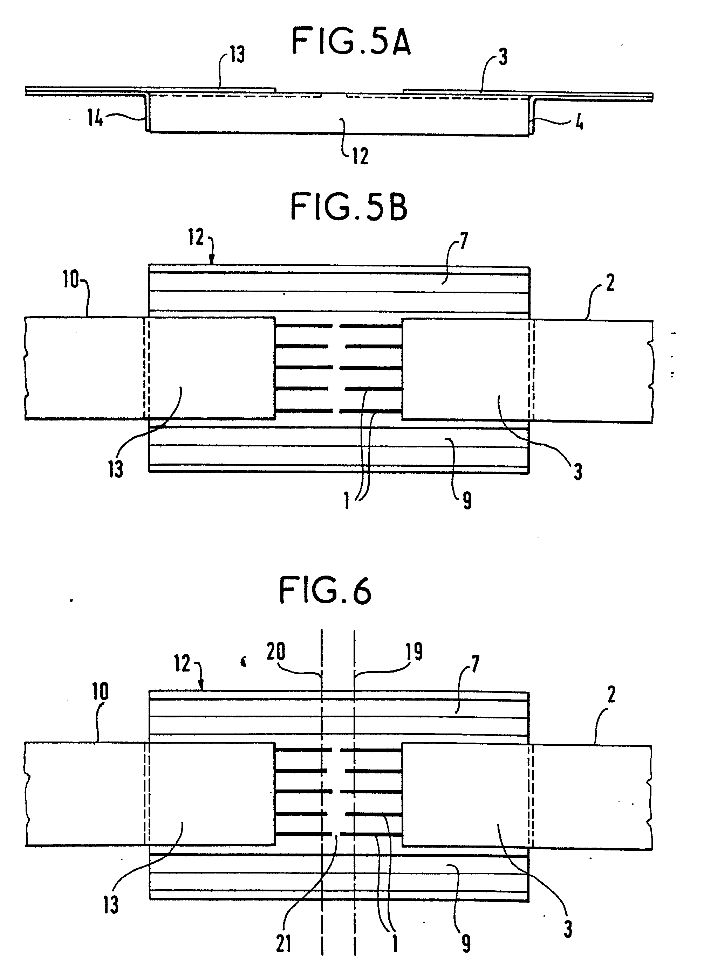

Comme représenté en figure 5A en élévation latérale et en figure 5B en plan vu de dessus, on utilise en outre la colle ou résine pour fixer les extrémités 3, 4, 13, 14 des rubans 2 et 10 sur la plaquette.

La figure 6 représente l'opération de double sciage de la matrice de positionnement. Celle-ci est nécessaire, car les extrémités des fibres à raccorder ne sont pas coplanaires, et l'état de surface des extrémités des fibres obtenues par cassure sans précaution n'est pas satisfaisant.

L'ensemble de la plaquette, des fibres optiques et du couvercle presseur, solidarisé par la résine polymérisée, est placé dans un étrier (non représenté), et deux lames de scie (non représentées) rigoureusement parallèles, distantes l'une de l'autre de 1 à 3 mm, réalisent le sciage sous lubrification à l'aide d'un lubrifiant pour coupe au diamant, dans des plans 19, 20 délimitant une zone 21 à éliminer. Il y a lieu de veiller à assurer l'absence d'éclat sur les cœurs des fibres, la planéité rigoureuse des faces en regard, la perpendicularité de la coupe, l'absence de vibrations et l'absence de cirage des fibres optiques par les matériaux composants, résine, matériaux de la plaquette et du couvercle presseur. Les temps de sciage sont de l'ordre de 10 minutes et conviennent très bien pour un raccordement sur chantier.

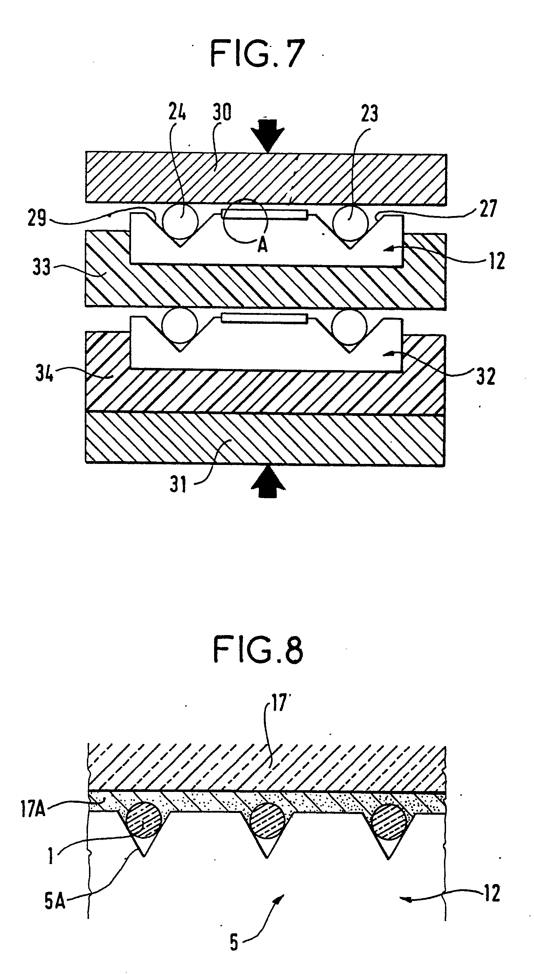

A la fin du sciage, les extrémités des demi-plaquettes séparées sont nettoyées à l'aide de solvants qui éliminent le léger encrassage éventuel des extrémités des fibres. Le repositionnement bout à bout des fibres est alors assuré par les deux vés latéraux de dimensions importantes (vés tels que 27, 29 de la figure 7 représentant deux plaquettes superposées 12, 32) dans lesquels viennent s'appuyer des cylindres de guidage en acier inoxydable 23, 24. Le serrage des demi-plaquettes sur les cylindres, dans un plan perpendiculaire aux nappes de fibres, est effectué par l'intermédiaire de matelas déformables en caoutchouc 33, 34 pour compenser les défauts de surface ou d'épaisseur des différents éléments (plaquettes, cylindres). Plusieurs plaquettes associées aux rubans du câble sont empilées, et le blocage de l'ensemble s'effectue à l'aide de clips.

Naturellement, pour éliminer les pertes de transmission à l'interface air-verre, et réduire les effets gênants dus à l'état de surface brut de sciage des extrémités des fibres, les demi-plaquettes sont pressées l'une contre l'autre frontalement, après interposition d'un liquide adaptateur d'indice, d'indice de réfraction voisin de celui du cœur des fibres (pour une jonction démontable), ou d'une résine polymérisable de même indice (pour une jonction fixe).

### Revendications

1. Procédé de raccordement de fibres optiques prédisposées en nappe dans un câble, éventuellement après développement de la nappe selon un ruban plat, comportant les opérations suivantes :
   a) on sépare les parties supérieure et inférieure du ruban emprisonnant les fibres,
   b) on coupe et écarte lesdites parties supérieure et inférieure sur une longueur permettant de dégager une zone de jonction pour les fibres,
   c) on pose les fibres à raccorder dans des vés de positionnement d'une plaquette,
   d) on dépose sur une partie des fibres à raccorder une colle ou une résine synthétique,
   e) on fait durcir la colle ou la résine synthétique, caractérisé en ce qu'il comprend en outre les opérations,
   f) avant de poser les fibres à raccorder dans les vés de positionnement de la plaquette, on coupe leurs extrémités sans précaution,
   g) on dépose la colle ou la résine synthétique sur au moins une partie de la longueur des fibres à raccorder disposée sur la plaquette, jusqu'à leurs extrémités, puis on dispose sur la longueur encollée des fibres un couvercle presseur,
   h) après durcissement de la colle ou de la résine synthétique, on scie à écartement constant dans des plans parallèles l'ensemble constitué de la plaquette, des fibres, de la colle ou résine synthétique et du couvercle presseur, et retire la zone comprise entre les plans de sciage,
   i) on remet bout à bout les parties subsistantes de la plaquette de part et d'autre des plans de sciage, avec coïncidence des extrémités des fibres, en interposant un liquide ou une résine polymérisable d'indice de réfraction voisin de celui du cœur des fibres, puis on presse les parties subsistantes de la plaquette l'un contre l'autre et les immobilise.

2. Procédé selon la revendication 1, caractérisé en ce que l'on dispose la plaquette en position horizontale, et l'on incline d'un angle faible par rapport à l'horizontale les extrémités du ruban de façon à faciliter la mise en place des fibres dans les vés de positionnement de la plaquette.

3. Procédé selon les revendications 1 ou 2, caractérisé en ce que l'on dispose sur les fibres une résine synthétique polymérisable par un rayonnement ultra-violet, puis un couvercle presseur laissant passer ce rayonnement, et on assure le durcissement de la résine par exposition au rayonnement ultra-violet.

4. Procédé selon l'une des revendications 1 à 3, caractérisé en ce que l'on remet bout à bout les parties subsistantes de la plaquette dans les plans de sciage en disposant des cylindres de guidage dans des vés de dimensions importantes disposés latéralement sur la plaquette et d'axes parallèles aux axes des fibres.

5. Procédé selon l'une des revendications 1 à 4, caractérisé en ce que l'on immobilise la plaquette, après remise bout à bout de ses parties subsistantes dans les plans de sciage, par compression entre des plateaux, avec interposition d'un matelas déformable.

6. Procédé selon l'une des revendications 1 à 5, pour raccordement de fibres optiques prédisposées dans un câble à empilage de rubans plats, caractérisé en ce que l'on effectue les opérations selon la revendication 1 sur chaque ruban plat, puis empile les parties subsistantes des plaquettes remises bout à bout avant de les immobiliser.

7. Plaquette pour la mise en œuvre du procédé selon la revendication 4, caractérisée en ce qu'elle est de forme rectangulaire, et comporte dans sa zone centrale une rangée de vés (5A, fig. 2) de largeur telle que les fibres optiques peuvent s'y loger, mais en restant en saillie par rapport à la face supérieure de la plaquette, et de chaque côté des vés (7, 9) de dimension importante permettant le logement de cylindres de guidage.

8. Plaquette selon la revendication 7, caractérisée en ce qu'elle est en un alliage ductile, et obtenue par emboutissage à l'aide d'une empreinte en un métal dur.

9. Plaquette selon la revendication 7, caractérisée en ce qu'elle est en un matériau thermoplastique de bonne stabilité dimensionnelle, de préférence en polyphénylène sulfuré, et obtenue par moulage.

**Claims**

1. A method of splicing optical fibres which are previously disposed in a layer in a cable, possibly after unrolling the layer into a flat tape configuration, said method including the following steps :

a) separating the upper and the lower parts of the tape between which the fibres are trapped,

b) cutting said upper and lower parts and moving them apart along a length which allows a fibre connection zone to be cleared,

c) laying the fibres to be spliced in positioning V-grooves in a plate,

d) applying adhesive or synthetic resin to a portion of the fibres to be spliced, and

e) hardening the adhesive or synthetic resin, characterized in that said method further includes the following steps :

f) before laying the fibres to be spliced in the positioning V-grooves of the plate, cutting their ends without taking special precautions,

g) applying the adhesive or the synthetic resin to at least a portion of the length of the fibres to be spliced which are disposed on the plate, up to their ends, then laying a pressing cover on the lengths of the fibres covered by adhesive or synthetic resin,

h) when the adhesive or the synthetic resin has hardened, sawing the assembly constituted by the plate, the fibres, the adhesive or synthetic resin and the pressing cover at a constant spacing in parallel planes and removing the zone which lies between the sawing planes,

i) placing the remaining portions of the plate on either side of the sawing planes again end to end, the fibres ends coinciding, interposing a polymerisable liquid or resin with a refractive index close to that of the fibre cores, and then pressing the remaining portions of the plate against each other and fixing them in position.

2. A method according to Claim 1, characterized in that the plate is disposed horizontally and that the ends of the tape are inclined at a small angle with respect to the horizontal so as to facilitate the positioning of the fibres in the V-grooves of the plate.

3. A method according to Claim 1 or 2, characterized in that a synthetic resin which can be polymerized by ultra-violet radiation is applied to the fibres, then a pressing cover which allows the radiation to pass through it is pressed on the fibres and the resin is hardened by exposing it to the ultra-violet radiation.

4. A method according to one of the Claims 1 to 3, characterized in that the remaining portions of the plate are placed end to end in the sawing plane, guide cylinders being disposed in large-sized V-grooves on the sides of the plate, the axes of the grooves being parallel to those of the fibres.

5. A method according to one of the Claims 1 to 4, characterized in that when the remaining portions of the plate have been placed end to end in the sawing planes, the plate is fixed by compressing it between press plates with a deformable cushion interposed therebetween.

6. A method according to one of the Claims 1 to 5 for the splicing of optical fibres previously disposed in a cable of stacked flat tapes, characterized in that the steps according to Claim 1 are effected on each flat tape, and that the remaining portions of the plates are stacked end to end before fixing them.

7. A plate for executing the method according to Claim 4, characterized in that it has a rectangular form and comprises in its central zone a range of V-grooves (5A, fig. 2) of such width that the optical fibres can be disposed therein, but remaining prominent in regard to the upper face of the plate, and comprises on each side large sized V-grooves (7, 9) permitting the placing of guide cylinders.

8. Plate according to Claim 7, characterized in that it consists of a ductile alloy and is obtained by stamping in a die of hard metal.

9. Plate according to Claim 7, characterized in that it is made of a thermoplastic material of good dimensional stability, preferably of sulphurized polyphenylene, and is obtained by casting.

**Ansprüche**

1. Verfahren zur Verbindung von Glasfasern, die vorher in einer Schicht in einem Kabel angeordnet sind, eventuell nach Abwickeln der Schicht gemäß einem flachen Band, das die folgenden Arbeitsgänge aufweist :

a) man trennt den oberen und unteren Teil des Bandes, die die Fasern umschließen,

b) man schneidet und entfernt die oberen und unteren Teile auf eine Länge, die eine Verbindungszone für die Fasern freigibt,

c) man legt die zu verbindenden Fasern in die V-förmigen Richt-Kerben einer Platte,

d) man gibt auf einen Teil der zu verbindenden Fasern einen Kleber oder ein synthetisches Harz,

e) man härtet den Kleber oder das synthetische Harz, dadurch gekennzeichnet, daß es außerdem die folgenden Arbeitsgänge aufweist :

f) ehe die zu verbindenden Fasern in die V-förmigen Richt-Kerben der Platte gelegt werden, schneidet man ihre Enden ohne besondere Vorsichtsmaßnahmen ab,

g) man bringt den Kleber oder das synthetische Harz auf mindestens einen Teil der auf der Platte liegenden Länge der zu verbindenden Fasern auf bis zu ihren Enden, dann versieht man die mit Kleber versehene Länge der Fasern mit einem Druckdeckel,

h) nach Erhärtung des Klebers oder des synthetischen Harzes sägt man in konstanten Abständen in parallelen Ebenen die Einheit bestehend aus der Platte, den Fasern, dem Kleber oder synthetischen Harz und dem Druckdeckel aus und entnimmt die zwischen den Sägeebenen enthaltene Zone,

i) man setzt die auf beiden Seiten der Sägeebene verbleibenden Enden der Platte aneinander, wobei die Faserenden aufeinandertreffen, wobei man eine Flüssigkeit oder ein polymerisierbares Harz mit einem Brechungsindex nahe dem des Faserkerns dazwischenbringt, dann preßt man die verbleibenden Teile der Platte aneinander und legt sie fest.

2. Verfahren nach Anspruch 1, dadurch gekennzeichnet, daß man die Platte in horizontaler Stellung anordnet und daß man die Enden des Bandes in einem in Bezug auf die Horizontale leicht geneigten Winkel anordnet, um die Positionierung der Fasern in den V-förmigen Richtkerben der Platte zu erleichtern.

3. Verfahren nach den Ansprüchen 1 und 2, dadurch gekennzeichnet, daß man auf die Fasern ein durch Ultraviolett-Strahlung polymerisierbares synthetisches Harz und dann einen Druckdeckel aufbringt, der diese Strahlung durchläßt, und daß man die Erhärtung des Harzes dadurch erhält, daß man es der Ultraviolett-Strahlung aussetzt.

4. Verfahren nach einem der Ansprüche 1 bis 3, dadurch gekennzeichnet, daß man die verbleibenden Teile der Platte in den Sägeebenen wieder Stoß auf Stoß aneinandersetzt, wobei man Führungszylinder in große V-förmige Richtkerben seitlich auf der Platte einsetzt, deren Achsen parallel zu denen der Fasern liegen.

5. Verfahren nach einem der Ansprüche 1 bis 4, dadurch gekennzeichnet, daß man nach dem Wiederaneinandersetzen der verbleibenden Enden der Platte in den Sägeebenen die Platte durch Kompression zwischen den Ebenen festlegt, wobei ein verformbares Polster dazwischengelegt ist.

6. Verfahren nach einem der Ansprüche 1 bis 5, zur Verbindung von Glasfasern, die in einem aus einem Stapel flacher Bänder bestehenden Kabel angeordnet sind, dadurch gekennzeichnet, daß man die Arbeitsgänge gemäß Anspruch 1 für jedes flaches Band durchführt und dann die verbleibenden Teile der Platten, die wieder aneinandergesetzt wurden, aufstapelt, ehe man sie festlegt.

7. Platte für die Durchführung des Verfahrens gemäß Anspruch 4, dadurch gekennzeichnet, daß sie von rechteckiger Form ist und in ihrem zentralen Bereich eine Reihe von V-förmigen Richtkerben (5A, Fig. 2) aufweist, die so breit sind, daß die Glasfasern hineingelegt werden können, aber noch in Bezug auf die Oberseite der Platte vorstehen, und daß sie auf jeder Seite V-förmige Richtkerben (7, 9) größerer Abmessungen aufweist, die die Aufnahme von Führungszylindern ermöglichen.

8. Platte nach Anspruch 7, dadurch gekennzeichnet, daß sie aus einer duktilen Legierung besteht und durch Prägung mithilfe eines Stempels aus hartem Metall erhalten wird.

9. Platte nach Anspruch 7, dadurch gekennzeichnet, daß sie aus einem thermoplastischen Material guter Formstabilität besteht, vorzugsweise aus geschwefeltem Polyphenylen, und durch Gießen hergestellt ist.

FIG.1

FIG.2

FIG.3

FIG.4

# FIG.5A

# FIG.5B

# FIG.6

## FIG.7

## FIG.8